Europäisches Patentamt

European Patent Office

Office européen des brevets

(11) Publication number: **0 329 200 A2**

# EUROPEAN PATENT APPLICATION

(21) Application number: **89106282.0**

(22) Date of filing: **03.01.85**

(51) Int. Cl.4: **B29C 67/20 , B29C 67/14**

(30) Priority: **06.01.84 GB 8400293**

(43) Date of publication of application:
**23.08.89 Bulletin 89/34**

(60) Publication number of the earlier application in accordance with Art.76 EPC: **0 148 763**

(84) Designated Contracting States:
**AT BE CH DE FR GB IT LI LU NL SE**

(71) Applicant: **The Wiggins Teape Group Limited P.O. Box 88 Gateway House Basing View Basingstoke Hampshire RG21 2EE(GB)**

(72) Inventor: **Radvan, Bronislaw 25 The Meadows Flackwell Heath Buckinghamshire(GB)**
Inventor: **Skelding, William Terence Haley 5 Mayhew Crescent High Wycombe Buckinghamshire(GB)**

(74) Representative: **Bridge-Butler, Alan James et al G.F. REDFERN & CO. High Holborn House 52/54 High Holborn London WC1V 6RL(GB)**

(54) **Moulded fibre reinforced plastics articles.**

(57) A process for making a moulded article of fibre reinforced plastics material which includes forming an aqueous foamed liquid medium containing air dispersed in the form of very small bubbles in water containing a surface active agent, said medium having dispersed therein particulate thermoplastics material and from 20% to 70% by weight of glass reinforcing fibres (2) between 7 mm and 50 mm long, depositing the dispersion on a foraminous support and effecting drainage through the support to form a fibrous material matrix web, in the form of a sheet (1), characterised by consolidating the sheet (1) by heat and pressure, heating the sheet so that the stresses embodied in the glass fibres cause the matrix to freely expand and become porous and then shaping the expanded material in a compression mould (7).

EP 0 329 200 A2

FIG. 1.

## MOULDED FIBRE REINFORCED PLASTICS ARTICLES

This invention relates to moulded articles of fibre reinforced plastics material and to a method of moulding such articles.

Heretofore, fibre reinforced plastics articles have been moulded from consolidated sheets of thermoplastics material reinforced with glass fibre mat formed from very long glass fibre strands (i.e. fibre bundles) of perhaps 200 centimetres or more in length which extend in a random serpentine manner throughout the sheet.

Thus, for example, in the manufacture of one such material, layers of glass fibre mat are interposed between layers of thermoplastics material, the composite structure being needled to produce a degree of integration of the layers, and then heated under pressure to produce the consolidated rigid sheet.

When such materials are heated to the softening temperature of the plastics matrix, prior to being fed into a forming press, slight expansion in thickness will occur. This is probably because the layers of mineral fibre, which are usually of glass, which had been pressed together during the laminating stage, spring back to partly regain their original configuration. However this expansion is relatively limited in extent and also results in the surface of the material being marred by coarse fibres and fibre bundles protruding out of the molten plastics matrix. Both of these drawbacks are particularly severe in the case of a needled construction.

The bundles of fibres which had been forced by the needling operation into loops normal to the surface of the sheet emerge and rise high above the surface to give an uneven hairy appearance. But the central layers of the web hardly expand in thickness, with the result that the stiffness of the expanded sheet hardly exceeds that of the original consolidated sheet.

Because of these problems, the hot expanded sheet is invariably formed into the required shape and cooled to below the softening temperature whilst under pressure in the mould so as to ensure that the moulded article is fully consolidated. In that condition, the moulded article will possess the maximum strength but its flexural stiffness is relatively low compared with its weight and the moulding will of course be impermeable.

According to the present invention a process for moulding articles of fibre reinforced plastics material includes heating and moulding a sheet of consolidated thermoplastics material which has dispersed therein from 20% to 70% by weight of reinforcing fibres which have a high modulus of elasticity (as herein defined) and between about 7 and about 50 millimetres long so that the stresses embodied in the glass fibres cause the matrix to expand into the configuration of the mould and become porous.

It has been found that the extend of the expansion and the relative increase in thickness of the finished moulding compared with the original sheet is much larger and more uniform than in the case of materials of known construction, resulting in an article which has a very mugh higher flexural stiffness and a relatively smooth coherent surface. This is especially the case when the degree of expansion is controlled by setting the dimensions of the forming tool to clearances less than the final thickness which would be achieved by free unrestricted expansion.

The relative improvement, and the method of achieving it, will become clear from the following comparative example.

Comparative Example

Samples of consolidated glass fibre reinforced thermoplastic sheet materials were cut to a width of approximately 2 centimetres each and placed together side by side on the lower platen of a hot press. The upper platen was then closed to a height of 6 millimetres, which was considerably greater than the thickness of any of the samples. The press was then heated to a temperature of 200° C, that is in excess of the softening point of the samples. After 5 minutes, the press was cooled and opened and the degree of expansion of each sample noted. The results are set out in Table 1.

TABLE 1

| Example | Material | Thickness (millimetres) | | Surface character after expansion |
|---|---|---|---|---|
| | | Before expansion | After expansion | |
| 1 | 60% by weight polypropylene reinforced with needled glass fibre mat | 3.75 | 4.5 | Uneven and hairy but impermeable |
| 2 | 50% by weight polypropylene reinforced with glass fibre mat as laminations | 2.1 | 4.9 | Irregular with protruding coarse fibre strands but impermeable |
| 3 | 50% by weight of polypropylene, 50% by weight 12 millimetre glass fibres prepared by conventional papermaking route and consolidated | 3.55 | 6.0 (i.e. to mould setting) | smooth and porous |
| 4 | 50% by weight of polypropylene, 50% by weight 12 millimetre long glass fibres prepared by process of UK Patents No. 1129757 and 1329409 | 2.65 | 6.0 (i.e. to mould setting) | smooth and porous |

It will be noted that only the two samples made by the papermaking methods expanded to fill the space between the platens and exerted sufficient pressure on the platen surfaces to produce a smooth, even surface.

The experiment was then repeated using samples made according to the process of UK Patents Nos. 1129757 and 1329409, but using different thermoplastics as the matrix material and preheating the platens to 275° C. The results are set out in Table 2 and it will be seen that the materials behaved in substantially the same way as the third and fourth examples of Table 1.

TABLE 2

| Example | Material | Thickness (millimetres) | | Surface characte after expansion |
|---|---|---|---|---|
| | | Before expansion | After expansion | |
| 5 | 60% by weight polyethylene terephthalate 40% by weight 12 mm long glass fibres | 3.35 | 6.00 | smooth and porous |
| 6 | 60% by weight polycarbonate 40% by weight 12 millimetre long glass fibres | 3.60 | 6.00 | smooth and porous |

Although the flexural stiffness of these materials tend to increase during expansion, the extensional stiffness decreases so that a maximum flexural stiffness is reached at a degree of expansion that is found to be, very appropriately, 100%, that is when the expanded thickness is double that of the starting material.

It has been found that the proportion of glass fibre reinforcement used in the preparation of the material greatly affects its ability to expand. In general, samples containing more reinforcement expand more and produce a more porous surface. It is preferred to use at least 30% by weight of glass fibre in polypropylene (or an equivalent volume fraction in plastics of other densities) and at the most, 70% by weight. The best compromise for a good expansion and well bonded integral but porous surface is achieved with 50% by weight of glass fibre.

Am improved end product may be achieved by laminating together several thin layers of materials of different compositions in the moulding process. Thus for example four sheets, each of a weight of 500 grams per square metre were prepared by the process of UK Patents Nos. 1129757 and 1329409, two containing 40% by weight of 12 millimetre long glass fibre 11 microns in diameter and two 60% by weight of the same fibre, the balance of the content of each sheet being of polypropylene. The four sheets were assembled with the two outer layers being those containing the lower glass fibre content. The four sheets were then heated in an open press and it was noted that the two centre layers expanded more than the outer layers to produce a very thick, stiff sampe with a smooth, even, well bonded surface.

Table 3 is a comparison of the effects of expansion between materials made according to the invention and two commercially available products produced by other processes. It will be seen that the materials of the invention could be expanded substantially without significant surface deterioration as compared with the commercially available products.

Table 4 shows the effect of glass content on expansion characteristics and demonstrates that an acceptable flexural modulus can be maintained for appropriate application even at a substantial degree of expansion.

Tables 5 and 6 shows the effect of glass content on expansion, but in four ply sheets in which the various plies have differing glass contents.

Table 7 shows the effect of expansion on stiffness, demonstrating that stiffness increased with degree of expansion.

4

TABLE 3

| MATERIAL | | EXAMPLE 7 - 35% GLASS 65% POLYPROPYLENE | EXAMPLE 8 - 50% GLASS 50% POLYPROPYLENE | SYMALIT | CHEMIE LINZ |
|---|---|---|---|---|---|
| FULLY CONSOLIDATED | | | | | |
| Grammage | (g/m²) | 2560 | 3000 | 2835 | 2875 |
| Thickness | (mm) | 2.27 | 2.45 | 2.52 | 2.55 |
| Flexural Modulus | (MPa) | 4162 | 6130 | 4630 | 4260 |
| EXPANDED IN 4mm GAP | | | | | |
| Thickness | (mm) | 3.89 | | 3.71 | 3.23 |
| Flexural Modulus | (MPa) | 2076 | | 2295 | 2864 |
| Absorption Capacity | (%, 1 min) | 3.50 | | 2.70 | 4.10 |
| | (%, 30 min) | 7.80 | | | 3.00 |
| Appearance | | Flat, even surface | | Irregular, uneven surface | Flat, uneven surface |
| EXPANDED IN 5mm GAP | | | | | |
| Thickness | (mm) | 4.78 | 5.00 | 4.66 | 3.89 |
| Flexural Modulus | (MPa) | 1722 | 2015 | 1300 | 1700 |
| Absorption Capacity | (%, 1 min) | 4.40 | 54 | 5.90 | 6.20 |
| | (%, 30 min) | 15 | | 6.60 | |
| Appearance | | Flat, even surface | Flat, even surface | Grossly irregular, uneven surface | Flat, uneven surface |
| EXPANDED IN 7mm GAP | | | | | |
| Thickness | (mm) | 6.50 | 6.60 | | |
| Flexural Modulus | (MPa) | 843 | 781 | | |
| Absorption Capacity | (%, 1 min) | 5.20 | 83 | | |
| | (%, 30 min) | 23 | 113 | | |
| Appearance | | Irregular, even surface | Flat, even surface | | |

Units :-

| | | |
|---|---|---|
| g/m² | = | Grams per square metre |
| mm | = | millimetres |
| MPa | = | Mega Pascals |
| min | = | minute |

EP 0 329 200 A2

TABLE 4

| Example | Glass Content (see Note 3) (%wt.) | Grammage (g/m²) | Thickness (mm) | Density (g/cc) | EXPANSION | | | | Gurley Porosity (sec/100ml) | Beck '22' (sec) | Absorpt. Capacity (%, 1 min) | Flexural Modulus (MPa) | Stiffness Function |
|---|---|---|---|---|---|---|---|---|---|---|---|---|---|
| | | | | | Gap (mm) | Thickness (mm) | Density (g/cc) | % | | | | | |
| 9 | 20 | 2170 | 2.10 | 1.04 | - | - | - | 0 | Non Porous | 267 | 0.2 | 3076 | 31 10³ |
| 10 | | 2170 | 2.10 | 1.04 | 3 | 2.2 | 0.98 | 5 | | | | | |
| 11 | | 2205 | 2.13 | 1.04 | 4 | 2.28 | 0.97 | 5 | | | | | |
| 12 | 40 | 2520 | 2.14 | 1.18 | - | - | - | 0 | Non Porous | 84 | 0.6 | 6393 | 59 10³ |
| 13 | | 2520 | 2.14 | 1.18 | 3 | 2.88 | 0.87 | 35 | " " | 2.2 | 2.8 | 3211 | 78 10³ |
| 14 | | 2660 | 2.23 | 1.19 | 4 | 3.82 | 0.70 | 70 | 18 | 1.6 | 9.4 | 1336 | 73 10³ |
| 15 | | 2660 | 2.23 | 1.19 | 5 | 4.29 | 0.62 | 90 | | | 14.6 | | |
| 16 | 60 | 2900 | 2.15 | 1.35 | - | - | | 0 | Non Porous | 54 | 1.0 | 5493 | 54 10³ |
| 17 | | 2900 | 2.15 | 1.35 | 3 | 2.97 | 0.98 | 40 | 28 | 15 | 9.7 | 4474 | 119 10³ |
| 18 | | 2865 | 2.14 | 1.34 | 4 | 3.94 | 0.73 | 85 | 3 | 1.9 | 33.7 | 2377 | 144 10³ |
| 19 | | 2865 | 2.14 | 1.34 | 5 | 4.87 | 0.59 | 130 | 1.5 | | 70.2 | 1746 | 201 10³ |
| 20 | | 2870 | 2.16 | 1.33 | 6 | 5.74 | 0.50 | 165 | 0.7 | 1.8 | 95.0 | 844 | 163 10³ |
| 21 | | 2870 | 2.16 | 1.33 | 8 | 7.59 | 0.38 | 250 | 0.3 | | 159.0 | 219 | 95 10³ |

NOTES:

1. Expansion between heated platens set at nominal gap with spacers

2. Glass - single fibres 13 millimetres long 11 microns diameter

3. In all cases the balance percentage is of polypropylene powder.

4. Units :- %wt = percentage by weight

g/m² = grams per square metre

mm = millimetres

g/cc = grams/cubic centimetre

sec/100ml = second per 100 millimetres

MPa = Mega Pascals

TABLE 5

| Example | | 22 | 23 | 24 |
|---|---|---|---|---|
| Construction:- Four Ply (glass % by weight in each ply) | | 40/60/60/40 | 50/50/50/50 | 60/40/40/60 |
| Grammage | (g/m²) | 2986 | 3000 | 2987 |
| **BEFORE EXPANSION** | | | | |
| Thickness | (mm) | 2.48 | 2.45 | 2.45 |
| Density | (g/cc) | 1.20 | 1.22 | 1.22 |
| Tensile | (MPa) | 48 | 34 | 48 |
| Flexural Modulus | (MPa) | 6585 | 6133 | 5884 |
| Flexural Strength | (MPa) | 101 | 80 | 87 |
| Stiffness Function | (N.mm) | 117 10³ | 96 10³ | 99 10³ |
| **AFTER 95% EXPANSION** | | | | |
| Density | (g/cc) | 0.62 | 0.62 | 0.62 |
| Gurley Porosity | (sec/100mℓ) | 0.80 | 0.90 | 1.10 |
| Beck '22' Smoothness | (sec) | 1.60 | 1.60 | 1.80 |
| Apparent Flexural Modulus | (MPa) | 2210 | 2015 | 1700 |
| Flexural Strength | (MPa) | 29 | 24 | 24 |
| Stiffness Function | (N.mm) | 271 10³ | 253 10³ | 202 10³ |
| **AFTER 175% EXPANSION** | | | | |
| Density | (g/cc) | 0.45 | 0.45 | 0.45 |
| Apparent Flexural Modulus | (MPa) | 914 | 781 | 860 |
| Flexural Strength | (MPa) | 11 | 11 | 11 |
| Stiffness Function | (N.mm) | 268 10³ | 224 10³ | 245 10³ |
| **NOTES** | | | | |

1. Glass 13 millimetres long, 11 microns in diameter

2. In all examples, the balance percentage is of polypropylene.

3. Expansion obtained between heated platens with spacer bars.

4. Units:- g/m² = grams per square centimetre

g/cc = grams per cubic centimetre

MPa = Mega Pascals

N.mm = Newtons per millimetre

sec/100ml = second per 100 millimetres

sec. = seconds

TABLE 6

| Example | | 25 | 26 |
|---|---|---|---|
| Four Ply Construction (glass % by weight in each ply) | | 40/40/40/40 | 25/55/55/25 |
| FULLY CONSOLIDATED | | | |
| Grammage | (g/m²) | 2207 | 1846 |
| Density | (g/cc) | 1.22 | 1.21 |
| Flexural Modulus | (MPa) | 4512 | 4337 |
| Stiffness Function | ($10^3$N.mm) | 23 | 27 |
| Gurley Porosity | (sec/100mℓ) | >180 | >180 |
| EXPANDED | | | |
| Expansion | (%) | 97 | 83 |
| Flexural Modulus | (MPa) | 1750 | 2778 |
| Stiffness Function | ($10^3$N.mm) | 90 | 108 |
| Gurley Porosity | (sec/100mℓ) | 1 | 69 |
| EXPANDED | | | |
| Expansion | (%) | 133 | 138 |
| Flexural Modulus | (MPa) | 1092 | 2079 |
| Stiffness Function | ($10^3$N.mm) | 94 | 183 |
| Gurley Porosity | (sec/100mℓ) | 3 | 56 |
| NOTES: | | | |
| 1. Glass 13 millimetres long, 11 microns in diameter | | | |
| 2. In all examples the balance percentage is of polypropylene | | | |
| 3. Expansion between heated platens with spacer bars | | | |
| 4. Units as in Table 5. | | | |

TABLE 7

| Example | Degree of Expansion % | Stiffness (N mm x $10^3$) |
|---|---|---|
| 27 | 0 | 11 |
| 28 | 55 | 22 |
| 29 | 90 | 37 |
| 30 | 110 | 43 |
| 31 | 150 | 38 |
| Note:- | | |
| 40% by weight glass fibre 13 millimetres long, 11 microns diameter | | |
| 60% by weight polyethylene terephthalate | | |

It will be evident that the expansion process can also be used with moulded articles which may be prepared for example according to the process described with reference to the accompanying drawings in which:-

Figure 1 is a cross section through a reinforced plastic sheet used in the process of the invention.

Figure 2 is a cross section through an infrared heating oven, and

Figure 3 is a cross section through a mould used in the process of the invention.

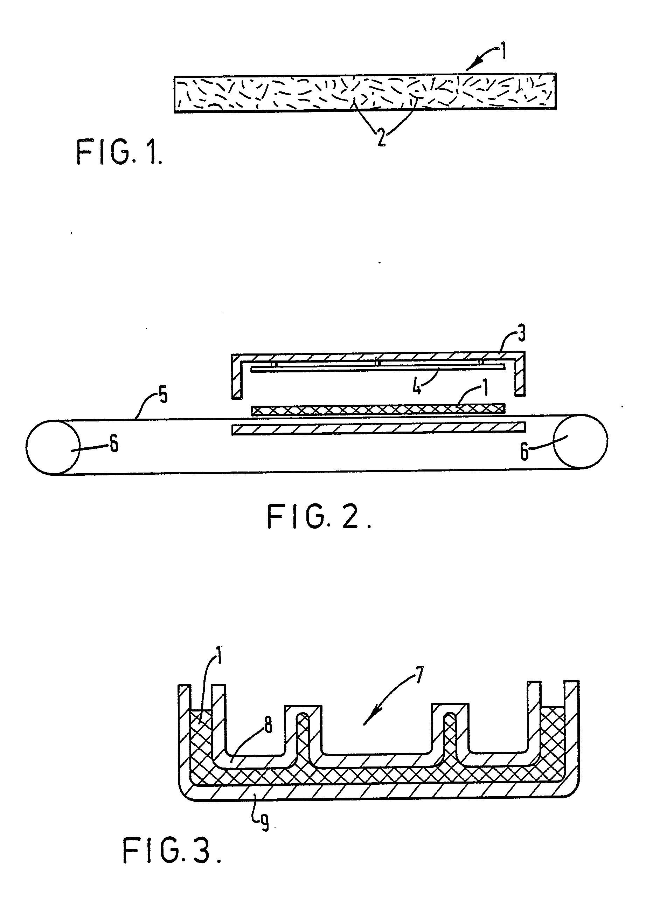

Referring first to Figure 1, this shows a sheet 1 of thermoplastics material reinforced with glass fibres 2 of between 7 and 50 millimetres in length.

Referring now to Figure 2, this shows an oven 3 having an infrared heating element 4 and a heat resistant belt 5 which is used to move the sheet 1 into and out of the oven for heating. The belt 5 is carried around tensioning rollers 6.

After heating, the sheet 1 is transferred to a mould 7 having upper and lower parts 8 and 9. After introduction into the mould 7, the parts 8 and 9 are subject to pressure, after which the upper mould part 8 is withdrawn to allow the glass fibre component of the sheet 1 to recover and expand the moulding. This process causes air to be drawn into the moulding and render it porous.

Optionally, the process described can be varied in a number of ways. Thus, for example, the upper mould part 8 may be closed again after the sheet has expanded to partly consolidate it. Or the sheet may be allowed to freely expand to its maximum extent and then subjected to moulding. It will be appreciated that the degree of compaction will affect the porosity of the sheet and can therefore be used as a means of determining the porosity of the moulded article.

The porosity of the finished moulding is of particular benefit when it is intended to coat the moulded article with an adhesive or a soft plastics foam. By applying vacuum to the other side of the article, good adhesion can be achieved without the necessity for drilling holes through the moulding.

## Claims

1. A process for making a moulded article of fibre reinforced plastics material which includes forming an aqueous foamed liquid medium containing air dispersed in the form of very small bubbles in water containing a surface active agent, said medium having dispersed therein particulate thermoplastics material and from 20% to 70% by weight of glass reinforcing fibres (2) between 7 mm and 50 mm long, depositing the dispersion on a foraminous support and effecting drainage through the support to form a fibrous material matrix web, in the form of a sheet (1), characterised by consolidating the sheet (1) by heat and pressure, heating the sheet so that the stresses embodied in the glass fibres cause the matrix to freely expand and become porous and then shaping the expanded material in a compression mould (7).

2. A process as claimed in claim 1 characterised in that the dispersion has at least 30% by weight of glass fibres (2).

3. A process as claimed in claim 2 characterised in that the dispersion has 50% by weight of glass fibres (2).

4. A process as claimed in claims 1-3 characterised in that the moulding is formed of two or more sheets (1) of different compositions which are laminated together during moulding.

5. A process as claimed in claim 4 characterised in that three or more sheets (1) are incorporated, the outer sheets (1) having a lower fibre content by weight than the inner sheet (1) or sheets (1).

6. A process as claimed in claims 1-5 characterised in that the sheet (1) is heated in an oven and then transferred to a mould (7) having at least two parts (8) (9) which are closed to effect moulding.

FIG. 1.

FIG. 2.

FIG. 3.